# EUROPÄISCHE PATENTSCHRIFT

(11) **EP 3 226 264 B1**
(45) Veröffentlichungstag und Bekanntmachung des Hinweises auf die Patenterteilung: **10.06.2020**
(21) Anmeldenummer: 17158627.4
(22) Anmeldetag: 01.03.2017
(51) Int. Cl.: H01F 7/18, F02D 41/20, F16K 31/06, G05D 16/00, H02M 3/00

(54) **STROMSTEUERUNG MIT EINEM DITHERSIGNAL**
POWER CONTROL WITH A DITHER SIGNAL
COMMANDE DE COURANT COMPRENANT UN SIGNAL DITHER

(30) Priorität: 31.03.2016 DE 102016205312
(43) Veröffentlichungstag der Anmeldung: 04.10.2017
(73) Patentinhaber: ZF Friedrichshafen AG, 88046 Friedrichshafen (DE)
(72) Erfinder: Hotter, Dominik, 84109 Wörth a. d. Isar (DE)
(74) Vertreter: ZF Friedrichshafen AG

(56) Entgegenhaltungen:
- WO-A1-2017/084964
- DE-A1-102014 203 970

## Beschreibung

Die Erfindung betrifft die Steuerung eines elektromagnetischen Ventils mithilfe eines Dithersignals. Insbesondere betrifft die Erfindung die Plausibilisierung eines durch das Ventil fließenden elektrischen Stroms.

Ein elektromagnetisch steuerbares Ventil umfasst einen Aktuator mit einer elektrischen Spule, einem beweglichen magnetischen Anker und einer Rückstellfeder, sowie ein Durchflussglied zur Steuerung eines Flusses von Fluid. Die Stellung des Ankers wirkt auf das Durchflussglied, sodass der Fluss des Fluids auf der Basis eines elektrischen Stroms durch die Spule gesteuert werden kann. Um eine mechanische Hysterese der Anordnung zu verringern kann der Anker ständig in einer Bewegung mit sehr kleiner Amplitude gehalten werden. Dazu kann die Spule mit einem pulsweitenmodulierten (PWM)-Signal oder mit Gleichstrom, dem ein Dithersignal mit kleiner Amplitude überlagert ist, angesteuert werden. Ein integrierter Schaltkreis zur Ansteuerung einer Spule auf diese Weise ist unter der Bezeichnung Infineon TLE8242 erhältlich.

In einem sicherheitsrelevanten System, beispielsweise einer hydraulischen Getriebesteuerung, soll die Stellung des Ankers auf der Basis des tatsächlich durch die Spule fließenden Stroms plausibilisiert werden, sodass ein Fehler bestimmt werden kann, wenn der beabsichtigte und der rekonstruierte elektrische Strom voneinander abweichen. Bei der Plausibilisierung ist der Strom des Dithersignals zu berücksichtigen. Der oben beschrieben Schaltkreis erlaubt zwar das Abtasten des bewirkten Stroms, die Bestimmung ist aber für viele Zwecke zu ungenau. Der bewirkte Strom kann auch bestimmt werden, indem jeweils für eine Periode des Dithersignals die mittleren Ein- und Ausschaltzeiten eines mittels PWM angesteuerten Stromventils abgefragt werden.

Das Dithersignal kann in Frequenz, Form, Phase oder Amplitude verändert werden, um beispielsweise eine rasche Änderung des durch die Spule fließenden Stroms zu unterstützen. Die Bestimmung der mittleren Ein- und Ausschaltzeiten muss an das veränderte Dithersignal angepasst werden, sodass die Strombestimmung auf der Basis mittlerer Schaltzeiten vorübergehend unbrauchbar sein kann.

WO 2017 084 964 A1 betrifft ein Verfahren zum Bestimmen eines Stroms, der durch einen Verbraucher fließt, wobei der Strom eine Gleichstromkomponente und eine Dithering-Komponente umfasst.

DE 10 2014 203 970 A1 offenbart eine Stromsteuerungseinrichtung zum Steuern eines Erregerstroms eines Solenoids, wobei die Stromsteuerungseinrichtung aufweist: einen Sollwerteinstellabschnitt, der einen Stromsollwert des Erregerstroms einstellt; einen Einschaltdauereinstellabschnitt, der eine Einschaltdauer eines Pulsbreitenmodulations (PWM)-Signals einstellt, das einer Ansteuerschaltung des Solenoids bereitgestellt wird, basierend auf dem Stromsollwert; und einen Signalerzeugungsabschnitt, der das PWM-Signal erzeugt, wobei der Stromsollwert ein Wert ist, der sich in einer Dither-Periode, die länger als eine PWM-Periode ist, periodisch ändert.

Der Erfindung liegt die Aufgabe zugrunde, eine verbesserte Technik zur Steuerung eines durch einen Verbraucher fließenden elektrischen Stroms mittels eines Dithersignals bereitzustellen. Die Erfindung löst diese Aufgabe mittels der Gegenstände der unabhängigen Ansprüche. Unteransprüche geben bevorzugte Ausführungsformen wieder.

Ein Verfahren zum Plausibilisieren eines durch einen Verbraucher fließenden Stroms gemäß der vorliegenden Erfindung ist in Anspruch 1 definiert.

Durch die vorbestimmte Synchronisierung, also die feste oder bekannte zeitliche Kopplung, kann der Hinweis verbessert um den Einfluss des Dithersignals kompensiert bzw. bereinigt werden. Außerdem kann eine Änderung des Dithersignals, beispielsweise bezüglich seiner Frequenz, seiner Amplitude oder seiner Signalform, jederzeit durchgeführt werden, ohne die Synchronisation zwischen dem Bestimmen des Ditherstroms und dem Bestimmen des Hinweises zu verlieren. Das Dithering kann insbesondere in Abhängigkeit des Sollstroms gesteuert werden. So kann eine Änderung des durch den Verbraucher fließenden Stroms durch eine vorübergehende Änderung des Dithersignals unterstützt werden. Auch können unterschiedliche Sollströme verbessert mit unterschiedlichen Dithersignalen unterstützt werden. Die Bestimmung des Iststroms kann dabei aufrechterhalten werden, sodass eine Plausibilisierung des Stroms, also ein Vergleich des Iststroms mit dem Sollstrom, weder unterbrochen wird noch unbrauchbare Resultate liefert.

Insbesondere kann der Ditherstrom mittels eines digitalen Stromventils gesteuert werden, das außer einer geschlossenen Stellung und einer offenen Stellung keine Zwischenstellungen kennt. Der Strom kann durch ein zeitliches Verhältnis von Dauern der geschlossenen und der offenen Stellung nach Art einer Pulsweitenmodulation (PWM) gesteuert werden. Das Dithersignal wird in eine Anzahl Ditherschritte unterteilt, wobei ein Ditherschritt einem Durchlauf des Verfahrens entspricht. Der Ditherstrom wird während eines Ditherschritts jeweils konstant gehalten.

Der durch den Verbraucher fließenden Strom kann verbessert um den Einfluss des Ditherstroms kompensiert werden, da dieser während des Durchlaufs konstant ist und dementsprechend einfach übernommen oder rekonstruiert werden kann.

Die Bestimmung des Iststroms ist innerhalb eines Durchlaufs des Verfahrens abgeschlossen, wobei keine Mittelung von beobachtbaren Werten über mehrere Ditherschritte, beispielsweise eine Ditherperiode, erforderlich ist. Der bestimmte und um den Ditherstrom kompensierte Iststrom kann auf verbesserte Weise zur Plausibilisierung des durch den Verbraucher fließenden Stroms verwendet werden. Eine Genauigkeit oder eine Bestimmungsgeschwindigkeit können so erhöht werden. In einer anderen Ausführungsform, die nicht Teil der Erfindung ist, können auch mehrere Ditherschritte für die Bestimmung des bewirkten Stroms herangezogen werden. Insbesondere können Ditherschritte einer Ditherperiode betrachtet werden, wobei Ein- und Ausschaltzeiten des Stromventils gemittelt werden können. Aus den mittleren Schaltzeiten kann dann der mittlere, durch den Verbraucher fließende Strom errechnet werden.

Das Verfahren kann mit praktisch jeder Signalform, Frequenz oder Amplitude des Dithersignals verwendet werden. Lediglich die Frequenz der Durchläufe des Verfahrens sollte größer, insbesondere mehrfach größer, als die Frequenz des Dithersignals sein, um sicher zu stellen, dass mehrere Ditherschritte in einer Ditherperiode liegen. Es ist besonders bevorzugt, dass das Dithersignal periodisch mit dem Mittelwert Null ist. Dadurch kann sichergestellt werden, dass der durch den Verbraucher fließende Strom den zeitlichen Mittelwert des Sollstroms annimmt und nicht durch den Ditherstrom langfristig erhöht oder verringert wird.

Dies kann insbesondere dann wichtig sein, wenn der Verbraucher ein stromgesteuertes Stellglied umfasst, mit dem ein Ablauf im Rahmen einer Steuerung oder Regelung beeinflusst werden soll. Beispielsweise kann der Verbraucher ein stromgesteuertes Ventil umfassen, insbesondere ein Stetigventil, dessen Durchfluss von Fluid über den Strom gesteuert werden kann. In der beschriebenen Konstellation kann der Sollstrom einen gewünschten fluiden Fluss durch das Stetigventil angeben und das Dithersignal kann eine passende Hysteresenverringerung bewirken, ohne den Sollstrom im zeitlichen Mittel zu beeinflussen.

Der Strom durch den Verbraucher kann durch Öffnen und Schließen eines digitalen Stromventils in einem vorbestimmten Zeitverhältnis gesteuert werden. Umgekehrt kann der durch den Verbraucher fließende Strom auf der Basis eines Zeitverhältnisses des Öffnens und Schließens des Stromventils bestimmt bzw. plausibilisiert werden. Beispielsweise kann ein Transistor (z. B. des Typs FET oder IGBT) einfach und kostengünstig als Stromventil verwendet werden. Die Stromsteuerung kann auch unter Zuhilfenahme eines integrierten Schaltkreises erfolgen, wobei bevorzugt ist, dass der Schaltkreis lediglich die Summe des Sollstroms und des Ditherstroms am Verbraucher einstellt und nicht noch einen zusätzlichen Ditherstrom überlagert. In einer Ausführungsform kann der oben erwähnte Schaltkreis TLE8242 zur Bewirkung des Stroms verwendet werden.

Wird während eines Durchlaufs des Verfahrens eine Anforderung für eine Änderung des Dithersignals erfasst, so kann die Anforderung unmittelbar oder verzögert umgesetzt werden. Die unmittelbare Umsetzung kann die Bestimmung des Hinweises bzw. die Kompensation des Hinweises um den Einfluss des Ditherstroms nicht beeinträchtigen. Dies gilt insbesondere dann, wenn die Bestimmung des Hinweises auf beobachtbare Werte eines Ditherschritts beschränkt ist. Werden Werte mehrerer Ditherschritte für die Kompensation eines Hinweises gemittelt, so kann eine algorithmische Nachführung des Mittelwerts auch über eine Änderung des Dithersignals bestimmt werden, sodass auch in einer Ditherperiode, die aus Abschnitten zweier unterschiedlicher Dithersignale zusammengesetzt ist, die Kompensation aufrecht erhalten sein kann.

Bei der verzögerten Umsetzung der Anforderung wird bevorzugt gewartet, bis eine aktuelle Periode des Dithersignals abgeschlossen ist, bevor die Änderung umgesetzt wird. Insbesondere kann die Änderung nach dem letzten Durchlauf der aktuellen Periode des Dithersignals oder zu Beginn des ersten Durchlaufs einer folgenden Periode umgesetzt werden. Dadurch kann vermieden werden, dass in einem zeitlichen Übergangsbereich eine verlängerte Ditherperiode mit Abschnitten mehrerer Dithersignale angesteuert wird.

Ein Computerprogrammprodukt umfasst Programmcodemittel zur Durchführung des oben beschriebenen Verfahrens, wenn das Computerprogrammprodukt auf einer Verarbeitungseinrichtung ausgeführt wird oder auf einem computerlesbaren Medium abgespeichert ist. Es ist insbesondere bevorzugt, dass das Verfahren auf einer Verarbeitungseinrichtung abläuft, die als programmierbarer Mikrocomputer oder Microcontroller ausgeführt ist.

Eine Vorrichtung zum Plausibilisieren eines durch einen Verbraucher fließenden Stroms gemäß der vorliegenden Erfindung ist in Anspruch 8 definiert.

In einer bevorzugten Ausführungsform umfasst die Vorrichtung ferner eine Ansteuervorrichtung zur Ansteuerung eines Stellglieds, das den durch den Verbraucher fließenden Strom bewirkt. Die Ansteuervorrichtung kann insbesondere den anzusteuernden Strom in Form eines Ansteuersignals für das Stellglied bereitstellen. Die Ansteuervorrichtung kann weiter bevorzugt einen Pulsweitenmodulator umfassen, insbesondere zur Ansteuerung eines digitalen Stromventils.

Die Erfindung wird nun mit Bezug auf die beigefügten Figuren genauer beschrieben, in denen:
- Fig. 1: eine Vorrichtung zur Steuerung eines durch einen Aktuator fließenden Stroms;
- Fig. 2: einen zeitlichen Verlauf eines durch den Aktuator von Fig. 1 fließenden Stroms;
- Fig. 4: ein Ablaufdiagramm eines Verfahrens zum Steuern eines durch einen Aktuator fließenden Stroms; und

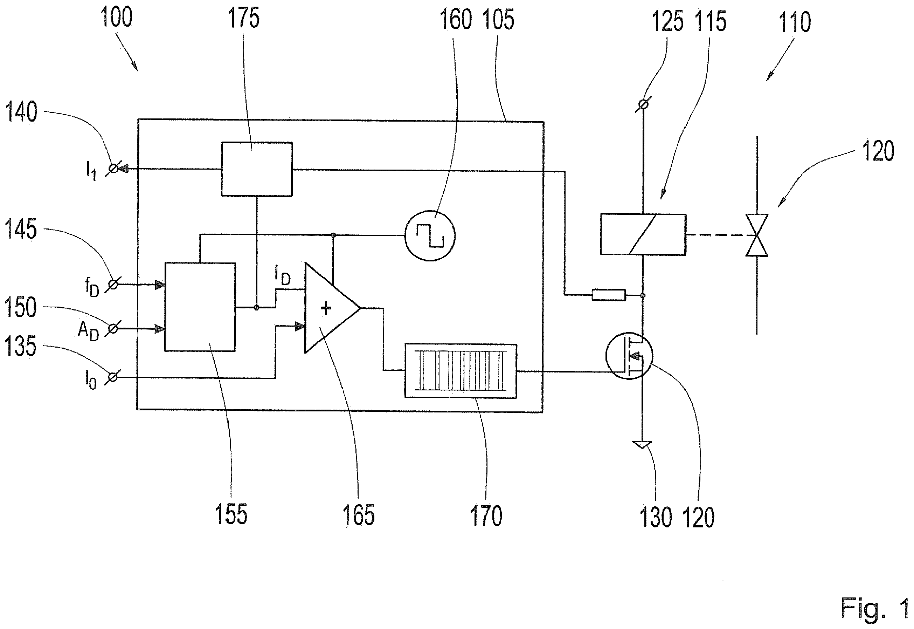

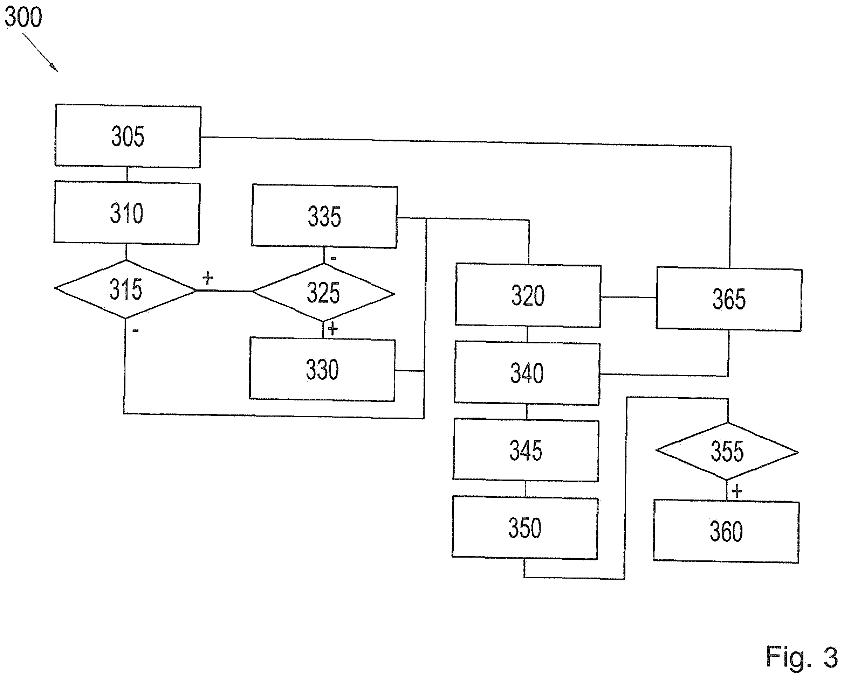

- Fig. 3: eine beispielhafte Erzeugung eines Dithersignals für die Vorrichtung von Fig. 1
darstellen.

Figur 1 zeigt ein System 100 zur elektrohydraulischen oder elektropneumatischen Steuerung eines Vorgangs. Das System 100 umfasst eine Steuervorrichtung 105 und ein elektrisch steuerbares Ventil 110. Im Ventil 110 wirkt ein elektrischer Aktuator 115 auf ein Durchflussglied 120, das den Fluss eines hydraulischen oder pneumatischen Fluids beeinflusst.

Der elektrische Aktuator 115 kann insbesondere eine Spule zur Erzeugung eines Magnetfelds umfassen, wobei das Magnetfeld auf einen üblicherweise federbelasteten Anker wirken kann, dessen Stellung über einen durch die Spule fließenden Strom beeinflusst werden kann. Der Anker wirkt auf das Durchflussglied 120, wobei die Stellung des Ankers das Durchflussverhalten des Durchflussglieds 120 beeinflusst. Insgesamt kann so der durch das Ventil 110 fließende elektrische Strom zur Steuerung eines Fluids verwendet werden, um einen Vorgang zu steuern. Dieser Vorgang kann beispielsweise den Wechsel einer eingelegten Gangstufe in einem Getriebe, etwa für ein Kraftfahrzeug, umfassen.

Der elektrische Aktuator 115 wirkt für die Steuereinrichtung 105 als elektrischer Verbraucher, wobei die Steuereinrichtung 105 auch zur Bestromung anderer Verbraucher eingesetzt werden kann. Der durch den Aktuator 115 fließende Strom kann insbesondere mittels eines Stromventils 120 gesteuert werden, das einen Anschluss des Aktuators 115 mit einem hohen Potential 125 oder einem niedrigen Potential 130 einer Stromquelle verbinden kann. In der gewählten Ausführungsform kann das Stromventil 120 nur geöffnet oder geschlossen werden, eine Zwischenstellung ist nicht möglich. Wird das Stromventil 120 jedoch abwechselnd geschlossen und geöffnet, so wird ein Strom durch den Aktuator 115 bewirkt, dessen Betrag von einem Verhältnis von Dauern des geschlossenen und des offenen Zustands des Stromventils 120 abhängt. Zum Steuern des Stromventils 120 kann eine Pulsweitenmodulation (PWM) oder eine Pulsfrequenzmodulation (PFM) verwendet werden.

Die Steuervorrichtung 105 kann allgemein als informationsverarbeitende Einrichtung, etwa als programmierbarer Mikrocomputer, oder in Form diskreter Logik oder Komponenten implementiert sein. Die Steuervorrichtung 105 umfasst einen ersten Eingang 135 für die Vorgabe eines Sollstroms l₀. und bevorzugt ferner einen Ausgang 140 zur Bereitstellung eines Hinweises auf einen Iststrom l₁ durch den Aktuator 115. Die Ein- und Ausgänge der Steuervorrichtung können in beliebiger Weise implementiert sein, beispielsweise als logische Schnittstellen oder spannungs- oder stromgesteuerte Schnittstellen.

Der Strom, der durch den Aktuator 115 bewirkt wird, ist aus zwei Komponenten zusammengesetzt, nämlich dem Sollstrom l₀ und einem Ditherstrom l_{D}, der auf der Basis eines Dithersignals gebildet werden kann. Dabei kann der Ditherstrom bzw. das Dithersignal beeinflussbar sein. Beispielsweise können ein zweiter Eingang 145 zur Abtastung Vorgabe einer Ditherfrequenz f_{D} oder ein dritter 150 Eingang zur Abtastung einer Vorgabe einer Ditheramplitude A_{D} vorgesehen sein. Das Dithersignal ist bevorzugt periodisch und hat weiter bevorzugt den Mittelwert Null. Es sind unterschiedliche Signalformen des Dithersignals möglich, beispielsweise ein Rechteck- oder ein Dreiecksignal, aber auch ein Trapez- oder ein anderes Signal, wobei in einer Ausführungsform ein weiterer Eingang zur Abtastung einer Vorgabe für die gewünschte Signalform vorgesehen sein kann.

Die Steuervorrichtung 105 umfasst eine Bestimmungseinrichtung 155 zur Bestimmung des Ditherstroms auf der Basis des Dithersignals. Das Dithersignal ist zeitabhängig, sodass der bestimmte Ditherstrom ebenfalls zeitabhängig ist. Es ist bevorzugt, dass der Ditherstrom periodisch bestimmt wird, beispielsweise mit einer Frequenz von 1000 Hz, und der bestimmte Ditherstrom dann während eines Ditherschritts (hier: 1/1000 s) konstant gehalten wird. Dazu kann die Bestimmungseinrichtung 155 auf der Basis des Takts eines Taktgenerators 160 periodisch zur Bestimmung des Ditherstroms veranlasst werden. Ein Summierer 165 kann zur Bildung der Summe des Sollstroms l₀ und des Ditherstroms l_{D} vorgesehen sein und in einer Ausführungsform sein Ergebnis synchron zum Takt des Taktgenerators 160 bereitstellen. Die bereitgestellte Summe der Ströme kann mittels einer Ansteuereinrichtung 170 so aufbereitet werden, dass das Stromventil 120 oder eine andere Einrichtung zur Steuerung des durch den Aktuator 115 fließenden Stroms angesteuert werden kann. Die Ansteuereinrichtung 170 kann insbesondere einen Pulsmodulator, bevorzugt einen Pulsweitenmodulator, umfassen.

Zur Plausibilisierung des durch den Aktuator 115 fließenden Stroms wird üblicherweise der Sollstrom l₀ mit dem Iststrom l₁ verglichen. Weichen die beiden Ströme um mehr als einen vorbestimmten Betrag voneinander ab, so kann ein Fehler im System 100 bestimmt werden. Der Iststrom l₁ kann unmittelbar bestimmt werden, beispielsweise auf der Basis eines Spannungsabfalls an einem Längswiderstand (Shunt) im Stromkreis des Aktuators 115. Es kann auch ausreichen, einen Hinweis auf den Iststrom l₁ zu bestimmen, indem beispielsweise Öffnungs- und Schließdauern des Stromventils 120 abgetastet werden. Diese Dauern können individuell für einen Ditherschritt oder zusammengefasst für die Ditherschritte einer Ditherperiode bestimmt und durch die Anzahl der Ditherschritte geteilt werden, um durchschnittliche Dauern zu bestimmen. Auf der Basis eines Verhältnisses der bestimmten Dauern kann dann, nach Art einer umgekehrten Pulsweitenmodulation, mittels einer Abtasteinrichtung 175 der Iststrom l₁ bestimmt werden.

Um einen direkten Vergleich mit dem Sollstrom l₀ zu ermöglichen, muss jedoch bei der individuellen Betrachtung noch der Anteil des Ditherstroms l_{D} vom Iststrom l₁ subtrahiert werden. Zu diesem Zweck kann die Abtasteinrichtung 175 mit der Bestimmungseinrichtung 155 verbunden sein. In einer Ausführungsform stellt die Abtasteinrichtung 175 den um den Ditherstrom l_{D} bereinigten Iststrom l₁ über den Ausgang 140 bereit. In einer anderen Ausführungsform kann die Abtasteinrichtung 175 auch den Vergleich mit dem Sollstrom l₀ selbst durchführen und ein Plausibilitätssignal nach außen bereitstellen, das darauf hinweist, ob die beiden Ströme genügend genau gleich groß sind.

Es wird vorgeschlagen, dass die Bestimmungseinrichtung 155 und die Abtasteinrichtung 175 auf eine vorbestimmte Weise miteinander synchronisiert sind, sodass ihre zeitlichen Verhalten in einem bekannten Verhältnis stehen. Erfindungsgemäss beziehen sich die Bestimmungen beider Elemente 155, 175 auf den gleichen Ditherschritt, sodass der Iststrom l₁ stets für den aktuellen Ditherschritt bestimmt werden kann. In einer anderen Ausführungsform, die nicht Teil der Erfindung ist, ist die Abtasteinrichtung 175 dazu eingerichtet, den Hinweis auf den durch den Aktuator 115 fließenden Strom auf der Basis von Abtastungen durchzuführen, die sich über mehrere Ditherschritte beziehen, beispielsweise auf eine volle Ditherperiode oder länger. Beispielsweise können Ein- und Ausschaltdauern des Stromventils 120 kumuliert für einen vorbestimmten Zeitabschnitt bestimmt werden und der kumulierte Wert kann durch die Anzahl Ditherschritte geteilt werden. So kann der Iststrom l₁ als Durchschnittswert über den Zeitabschnitt bestimmt werden.

Wird nun während einer laufenden Ditherperiode ein Parameter des Dithersignals geändert, beispielsweise eine Ditherfrequenz, so kann die korrekte Bildung des Durchschnitts erschwert sein. Durch die Synchronisierung mit der Bestimmungseinrichtung 155 ist die Abtasteinrichtung 175 jedoch stets über das im aktuellen Ditherschritt bestimmte Dithersignal informiert, sodass das Dithersignal bzw. der Ditherstrom auch über die Änderung hinweg korrekt berücksichtigt werden kann.

Die Synchronisierung besteht darin, dass sich die Bestimmungseinrichtung 155 und die Abtasteinrichtung 175 jeweils in ihren Bestimmungen auf den gleichen Zeitabschnitt beziehen, in dem der durch den Aktuator 115 fließende Strom zumindest nominell konstant bleibt. In einer anderen Ausführungsform ist ein Synchronisationssignal von der Bestimmungseinrichtung 155 zur Abtasteinrichtung 175 vorgesehen, um die Änderung der Ditherparameter anzuzeigen. Eine laufende Bestimmung des Iststroms l₁ über mehrere Ditherschritte hinweg kann dann verworfen und mit dem Beginn einer neuen Ditherperiode neu begonnen werden. Die Bestimmung kann auch unter Berücksichtigung der neuen Ditherparameter fortgeführt werden.

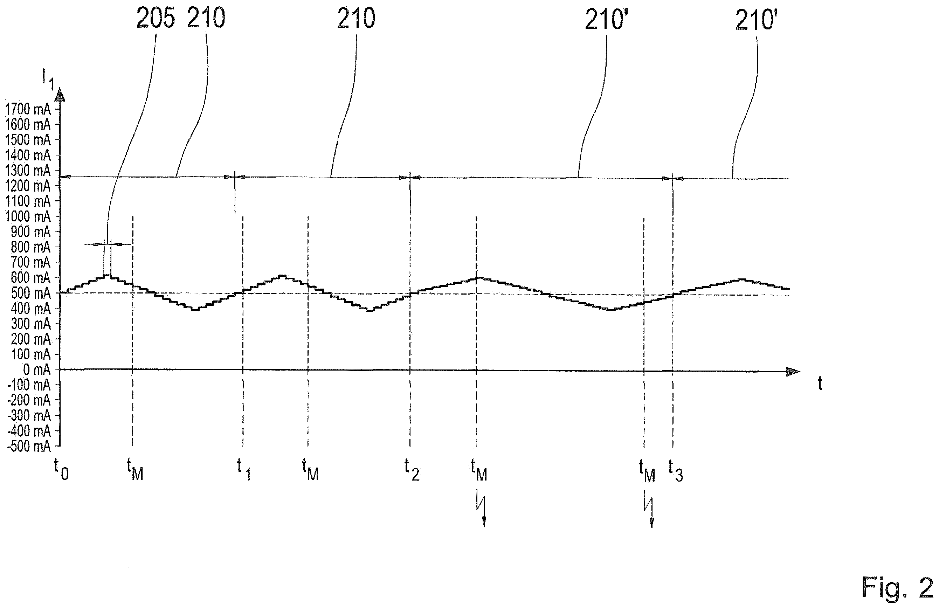

Fig. 2 zeigt einen zeitlichen Verlauf eines durch den Aktuator 115 von Fig. 1 fließenden Stroms l₁. Die dargestellten Werte sind als rein beispielhaft zu betrachten. Einem Sollstrom l₀ von 500 mA ist ein dreiecksförmiger Ditherstrom l_{D} mit einer Amplitude von 200 mA und einer Frequenz von 130,21 Hz überlagert. Die Dauer eines Ditherschritts 205 ist konstant. Zu Beginn der Darstellung, ab einem Zeitpunkt t₀, setzt sich eine Ditherperiode 210 aus 24 Ditherschritten 205 zusammen. Zu Zeitpunkten t_{M} erfolgt die Bestimmung des Iststroms l₁, indem die Ströme oder korrespondierenden Schaltzeiten des Stromventils 120 über die vergangenen Ditherschritte 205 einer Ditherperiode 210 gemittelt werden. Dabei ist nicht von Bedeutung, wann innerhalb der Ditherperiode 210 der Zeitpunkt t_{M} liegt. Liegen die Zeitpunkte t_{M} in Abständen einer Ditherperiode 210, so ist eine kontinuierliche Bestimmung möglich.

Zu einem Zeitpunkt t₁ trifft eine Anforderung zur Änderung einer Ditherfrequenz ein, die durch eine Änderung der Anzahl Ditherschritte 205 einer Ditherperiode 210 umgesetzt werden soll. Die Änderung erfolgt jedoch nicht sofort, sondern erst mit dem Ende der laufenden Ditherperiode 210 zu einem Zeitpunkt t₂. Die Bestimmung des Iststroms zwischen t₁ und t₂ ist davon nicht beeinträchtigt, da sich die Parameter des Dithersignals nicht geändert haben. Ohne Berücksichtigung der Änderung sind die folgenden beiden Bestimmungen jedoch fehlerhaft, da die neue Ditherperiode 210' mehr als 24 Ditherschritte 205 umfasst. Erst ab dem Zeitpunkt t₃, wenn eine komplette neue Ditherperiode 210' verstrichen ist, können wieder korrekte Bestimmungen über die vergangene Ditherperiode 210' durchgeführt werden.

Wir die Anforderung zum Zeitpunkt t1 sofort umgesetzt, so ist ohne eine Synchronisierung der Bestimmung mit der Generierung des Ditherstroms eine Zeit, in der keine verlässliche Plausibilisierung des durch den Aktuator 115 fließenden Stroms möglich ist, noch länger. Eine aktuelle Messung muss verworfen werden, dann muss gewartet werden, bis eine neue Ditherperiode 210' sicher begonnen hat und dann bis sich vollständig verstrichen ist.

Figur 3 zeigt ein Ablaufdiagramm eines Verfahrens 300 zur Erzeugung eines Dithersignals für die Steuervorrichtung 105 von Fig. 1. Das Verfahren 300 ist insbesondere zur periodischen Durchführung bzw. zum periodischen Durchlauf, beispielsweise auf der Basis des Takts des Taktgenerators 160, eingerichtet. Ein Durchlauf kann insbesondere einem Ditherschritt 205 entsprechen.

In einem ersten Schritt 305 wird der Sollstrom l₀ bestimmt. Dann können in einem Schritt 310 die Frequenz und/oder die Amplitude des Dithersignals bestimmt werden. In einem Schritt 315 kann bestimmt werden, ob sich die Vorgaben des Schritts 310 gegenüber einem vergangenen Durchlauf des Verfahrens 300 geändert haben. Ist dies nicht der Fall, so kann in einem Schritt 320 der Ditherstrom in Abhängigkeit von der Zeit bestimmt werden. Die Zeit kann insbesondere einer Aufrufzeit des Verfahrens 300 entsprechen. Im Schritt 320 wird bevorzugt zunächst das Dithersignal bestimmt und dann in den Ditherstrom umgesetzt, insbesondere mittels einer linearen Abbildung.

In einer Ausführungsform kann auch eine Umgehungsfunktion realisiert sein, die das Ansteuern des Sollstroms l₀ unmittelbar und ohne Zuschaltung eines Ditherstroms bewirkt. Die Umgehungsfunktion kann beispielsweise ausgelöst werden, wenn entweder der Sollstrom l₀, die Ditherfrequenz oder die Ditheramplitude den Wert Null aufweist.

Sollte im Schritt 315 eine Änderung der Dither-Vorgaben bestimmt worden sein, so kann in einem Schritt 325 geprüft werden, ob die Vorgaben sofort zu übernehmen sind, worauf sie in einem Schritt 330 übernommen werden können, oder erst nach Beendigung einer aktuellen Ditherperiode 210, worauf in einem Schritt 335 ein entsprechendes Flag gesetzt werden kann. Anschließend wird in jedem Fall der oben beschriebene Schritt 320 durchgeführt.

Im Anschluss wird in einem Schritt 340 der Iststrom l₁ bestimmt. In einer Ausführungsform wird dieser Schritt nicht bei jedem Durchlauf des Verfahrens 300 ausgeführt, sondern beispielsweise nur einmal pro Ditherperiode 210.

In einem Schritt 345 wird die Summe des Sollstroms l₀ aus dem Schritt 305 und des Ditherstroms l_{D} aus dem Schritt 320 gebildet und die Summe wird in einem nachfolgenden Schritt 350 umgesetzt, indem beispielsweise das Stromventil 120 passend angesteuert wird. Das Ansteuern des Schritts 350 kann ein Umsetzen des bestimmten Summenstroms in ein passendes Signal, etwa ein PWM-Signal, umfassen.

In einem Schritt 355 kann überprüft werden, ob das Flag von Schritt 335 gesetzt ist und gleichzeitig der vorgesehene Zeitpunkt zum Anwenden der geänderten Vorgaben gekommen ist. Ist dies der Fall, so können die neuen Vorgaben in einem Schritt 360 angewandt werden. Die neuen Vorgaben werden bevorzugt der Grenze zwischen zwei Ditherperioden 210 angewandt, also etwa nach dem letzten Ditherschritt 205 der Ditherperiode 210 mit den alten Parametern oder vor dem ersten Ditherschritt 205 der Ditherperiode 210' mit den neuen Parametern.

In in einem Schritt 365 wird der bestimmte Iststrom l₁ um den Ditherstrom l_{D} verringert. Dazu wird Gebrauch gemacht von dem im Schritt 320 gebildeten Ditherstrom (bzw. dem Dithersignal) und dem im Schritt 340 abgetasteten Iststrom l₁. Das Resultat kann beispielsweise über den Ausgang 140 bereitgestellt werden. In einer weiteren Ausführungsform wird auch unmittelbar ein Vergleich zwischen dem um den Ditherstrom l_{D} bereinigten Iststrom l₁ mit dem Sollstrom l₀ durchgeführt und das Ergebnis kann in entsprechender Weise bereitgestellt werden.

Es ist bevorzugt, dass die Steuervorrichtung 105 dazu eingerichtet ist, mehrere Instanzen des Verfahrens parallel abzuarbeiten, um mehrere Aktuatoren 115 gleichzeitig steuern zu können. Es ist besonders bevorzugt, dass dabei die Ditherschritte 205 jeweils gleich lang und bevorzugt miteinander synchron sind.

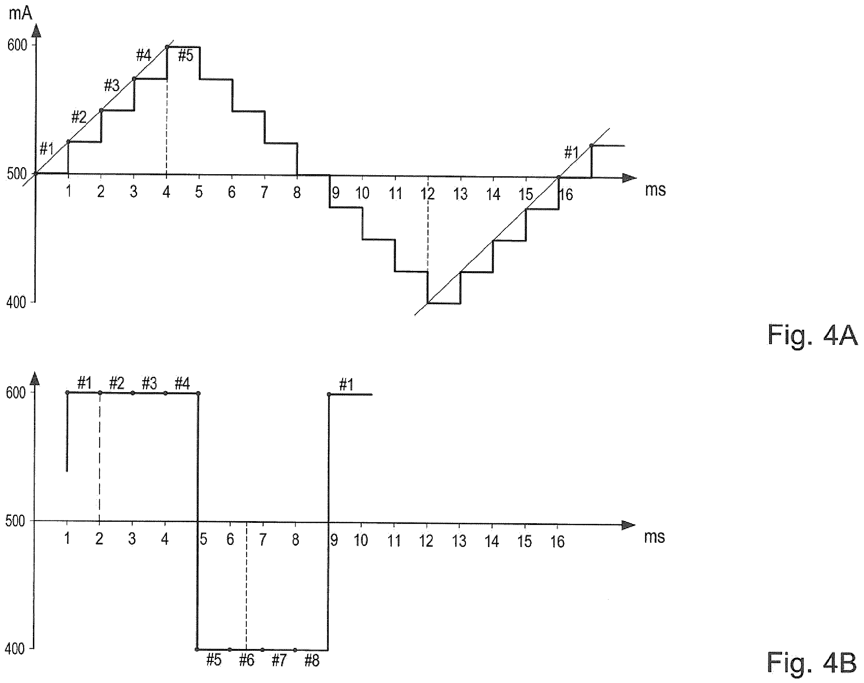

Fig. 4 zeigt eine beispielhafte Erzeugung eines Dithersignals bzw. eines Ditherstroms für die Steuervorrichtung 105, insbesondere die Bestimmungseinrichtung 155, von Fig. 1. Vorliegend wird in Fig. 4A eine dreieckige und in Fig. 4B eine rechteckige Signalform verwendet. In beispielhafter Weise sei l₀ 500 mA und die Dauer eines Ditherschritts 305 betrage 1 ms. Dabei beträgt die Ditheramplitude ±100 mA = 200 mA. Eine Ditherperiode 210 umfasse für die Dreiecksform 16 Ditherschritte 205 (Ditherfrequenz 62,5 Hz) und für die Rechteckform 8 Ditherschritte 205 (Ditherfrequenz 125 Hz). Die Anzahl der Ditherschritte 205 pro Ditherperiode 210 wird "NumSteps" genannt.

Die im Folgenden beschrieben Vorgehensweise kann in jedem Ditherschritt 205 einmal durchgeführt werden, um den jeweiligen Betrag des Dithersignals und damit die Stärke des Ditherstroms l_{D} in Abhängigkeit der Zeit zu bestimmen. Als Maß für die Zeit ist dabei vorteilhaft eine laufende Nummer des Ditherschritts 205 in der Ditherperiode 210 zu verwenden, wobei die Nummer in Fig. 4 beispielhaft als #1, #2 etc. angedeutet ist. In einer anderen Ausführungsform kann die Vorgehensweise asynchron zu Grenzen der Ditherschritte 205 durchlaufen werden. Der aktuelle Ditherschritt 205 kann dann auf der Basis eines Verhältnisses der Frequenzen der Durchführung des Verfahrens und der Ditherfunktion und einer Aufrufzeit bestimmt werden.

In einer Ausführungsform wird ein einer ersten Variablen ("DirectionFlag") vermerkt, ob der Ditherwert gegenüber dem letzten Ditherschritt vergrößert oder verkleinert werden soll. In Abhängigkeit der Amplitude sind Minimal- und Maximalwerte ("MaxValue" und "MinValue") vorgegeben, die nicht unter- bzw. überschritten werden können. Eine zweite Variable trägt den Betrag der Veränderung ("StepSize") und eine dritte Variable die Anzahl Ditherschritte 205, über die MaxValue oder MinValue beibehalten werden soll ("NumLimit").

Bei jedem Aufruf des Verfahrens wird auf den Ditherwert des letzten Ditherschritts 205 der Betrag StepSize in Abhängigkeit des DirectionFlag addiert oder von ihm subtrahiert. Ferner wird gezählt, wie oft MaxValue oder MinValue erreicht worden sind. Entspricht diese Anzahl NumLimit, so wird sie zurückgesetzt und das DirectionFlag negiert.

Für Fig. 4A gilt: NumSteps = 16; NumLimit = 1; StepSize = (Ditheramplitude ^{∗} 2 / NumSteps) = 25 mA; MinValue = 400 mA, MaxValue = 600 mA.

Für Fig. 4B gilt entsprechend: NumSteps = 8; NumLimit = NumSteps / 2 = 4; StepSize = (Ditheramplitude) = 200 mA; MinValue = 400 mA, MaxValue = 600 mA.

### Bezugszeichen

- 100: System
- 105: Steuervorrichtung
- 110: Ventil
- 115: elektrischer Aktuator
- 120: Durchflussglied
- 125: hohes Potential
- 130: niedriges Potential
- 135: erster Eingang zur Abtastung Vorgabe Sollstrom l₀
- 140: Ausgang zur Bereitstellung Hinweises auf Iststrom l₁
- 145: zweiter Eingang zur Abtastung Vorgabe Ditherfrequenz f_{D}
- 150: dritter Eingang zur Abtastung Vorgabe Ditheramplitude A_{D}
- 155: Bestimmungseinrichtung
- 160: Taktgenerator
- 165: Summierer
- 170: Ansteuereinrichtung
- 175: Abtasteinrichtung

- 205: Ditherschritt
- 210: Ditherperiode

- 300: Verfahren
- 305: Bestimmen Sollstrom
- 310: Bestimmen Frequenz und Amplitude des Dithersignals
- 315: Vorgaben geändert?
- 320: Bestimmen Ditherstrom in Abhängigkeit der Zeit
- 325: sofort anwenden?
- 330: Anwenden
- 335: Flag setzen
- 340: Bestimmen Iststrom
- 345: Bilden Summe Sollstrom und Ditherstrom
- 350: Ansteuern Stromventil
- 355: letzter Durchlauf und Flag
- 360: Anwenden
- 365: Bereitstellen oder Vergleichen

## Patentansprüche

1. Verfahren (300) zum Plausibilisieren eines durch einen Verbraucher (115) fließenden Stroms, wobei das Verfahren (300) folgende Schritte umfasst:
- Bestimmen (320) eines Ditherstroms auf der Basis eines Dithersignals und eines gegenwärtigen Zeitpunkts,
- wobei das Dithersignal durch eine Frequenz, eine Amplitude und eine Signalform bestimmt ist;
- wobei das Dithersignal in eine Anzahl Ditherschritte unterteilt ist und der Ditherstrom während eines Ditherschritts jeweils konstant gehalten wird;
- Ansteuern (350) eines Stromventils (120), um die Summe eines Sollstroms und des bestimmten Ditherstroms durch den Verbraucher (115) zu bewirken;
- Bestimmen (340) eines durch den Verbraucher (115) fließenden Iststroms;
- Verringern (365) des bestimmten Iststroms um den Ditherstrom; und
- Vergleichen (365) des Sollstroms mit dem verringerten Iststrom; wobei
- das Bestimmen (320) des Ditherstroms und das Bestimmen (340) des Iststroms derart miteinander synchronisiert sind, dass sich der bestimmte Iststrom und der bestimmte Ditherstrom auf den gleichen Ditherschritt beziehen.

2. Verfahren (300) nach Anspruch 1, wobei das Dithersignal periodisch mit dem Mittelwert Null ist.

3. Verfahren (300) nach einem der vorangehenden Ansprüche, wobei der Strom durch den Verbraucher (115) durch Öffnen und Schließen eines digitalen Stromventils (120) in einem vorbestimmten Zeitverhältnis bewirkt wird.

4. Verfahren (300) nach Anspruch 3, wobei der durch den Verbraucher (115) fließende Strom auf der Basis eines Zeitverhältnisses des Öffnens und Schließens des Stromventils (120) bestimmt wird.

5. Verfahren (300) nach einem der vorangehenden Ansprüche, wobei während eines Durchlaufs des Verfahrens eine Anforderung (315) für eine Änderung des Dithersignals erfasst wird und die Änderung unmittelbar umgesetzt (330) wird.

6. Verfahren (300) nach einem der Ansprüche 1 bis 4, wobei das Dithersignal periodisch ist, wobei eine Anforderung (315) für eine Änderung des Dithersignals erfasst wird und die Änderung zwischen dem Ende der aktuellen Periode des Dithersignals und dem Beginn einer folgenden Periode des Dithersignals umgesetzt (360) wird.

7. Computerprogrammprodukt mit Programmcodemitteln zur Durchführung eines Verfahrens (300) nach einem der vorangehenden Ansprüche, wenn das Computerprogrammprodukt auf einer Verarbeitungseinrichtung (105) ausgeführt wird oder auf einem computerlesbaren Medium abgespeichert ist.

8. Vorrichtung (105) zum Plausibilisieren eines durch einen Verbraucher (115) fließenden Stroms, wobei die Vorrichtung folgendes umfasst: eine Bestimmungseinrichtung (155) zur Bestimmung eines Ditherstroms auf der Basis eines Dithersignals und eines gegenwärtigen Zeitpunkts, wobei das Dithersignal durch eine Frequenz, eine Amplitude und eine Signalform bestimmt ist; wobei das Dithersignal in eine Anzahl Ditherschritte unterteilt ist und der Ditherstrom während eines Ditherschritts jeweils konstant gehalten wird; eine Ansteuereinrichtung (170) zur Ansteuerung eines Stromventils (120), um die Summe eines Sollstroms und des bestimmten Ditherstroms durch den Verbraucher (115) zu bewirken; eine Abtasteinrichtung (175) zur Abtastung eines durch den Verbraucher (115) fließenden Iststroms und zur Bereitstellung des um den Ditherstrom verringerten Iststroms zum Vergleich mit dem Sollstrom, wobei die Bestimmungseinrichtung (155) derart mit der Abtasteinrichtung (175) synchronisiert ist, dass sich der bestimmte Iststrom und der bestimmte Ditherstrom auf den gleichen Ditherschritt beziehen.

## Claims

1. Method (300) for plausibilizing a current flowing through a consumer (115) wherein the method (300) comprises the following steps:
- determining (320) a dither current on the basis of a dither signal and a present point in time,
- wherein the dither signal is determined by a frequency, an amplitude and a signal waveform;
- wherein the dither signal is divided into a number of dither steps and the dither current is kept constant in each case during a dither step;
- driving (350) a current valve (120) in order to bring about the sum of a desired current and the determined dither current through the consumer (115);
- determining (340) an actual current flowing through the consumer (115);
- reducing (365) the determined actual current by the dither current; and
- comparing (365) the desired current with the reduced actual current;
wherein
- determining (320) the dither current and determining (340) the actual current are synchronized with one another in such a way that the determined actual current and the determined dither current relate to the same dither step.

2. Method (300) according to Claim 1, wherein the dither signal is periodic with the average value of zero.

3. Method (300) according to either of the preceding claims, wherein the current through the consumer (115) is brought about by opening and closing a digital current valve (120) in a predetermined time ratio.

4. Method (300) according to Claim 3, wherein the current flowing through the consumer (115) is determined on the basis of a time ratio of opening and closing the current valve (120).

5. Method (300) according to any of the preceding claims, wherein during a pass of the method a request (315) for a change of the dither signal is detected and the change is implemented (330) immediately.

6. Method (300) according to any of Claims 1 to 4, wherein the dither signal is periodic, wherein a request (315) for a change of the dither signal is detected and the change is implemented (360) between the end of the present period of the dither signal and the beginning of a following period of the dither signal.

7. Computer program product comprising program code means for carrying out a method (300) according to any of the preceding claims when the computer program product is executed on a processing device (105) or is stored on a computer-readable medium.

8. Apparatus (105) for plausibilizing a current flowing through a consumer (115), wherein the apparatus comprises the following: a determining device (155) for determining a dither current on the basis of a dither signal and a present point in time, wherein the dither signal is determined by a frequency, an amplitude and a signal waveform; wherein the dither signal is subdivided into a number of dither steps and the dither current is kept constant in each case during a dither step; a drive device (170) for driving a current valve (120) in order to bring about the sum of a desired current and the determined dither current through the consumer (115); a sampling device (175) for sampling an actual current flowing through the consumer (115) and for providing the actual current reduced by the dither current for comparison with the desired current, wherein the determining device (155) is synchronized with the sampling device (175) in such a way that the determined actual current and the determined dither current relate to the same dither step.

## Revendications

1. Procédé (300) de contrôle de la plausibilité d'un courant qui circule à travers un récepteur (115), le procédé (300) comprenant les étapes suivantes :
- détermination (320) d'un courant de battement sur la base d'un signal de battement et d'un instant actuel,
- le signal de battement étant déterminé par une fréquence, une amplitude et une forme de signal ;
- le signal de battement étant subdivisé en un certain nombre de pas de battement et le courant de battement étant respectivement maintenu constant pendant un pas de battement ;
- commande (350) d'un régulateur de courant (120) afin de produire la somme d'un courant de consigne et du courant de battement déterminé à travers le récepteur (115) ;
- détermination (340) d'un courant réel qui circule à travers le récepteur (115) ;
- réduction (365) du courant réel déterminé du courant de battement ; et
- comparaison (365) du courant de consigne avec le courant réel réduit ;
- la détermination (320) du courant de battement et la détermination (340) du courant réel étant synchronisées entre elles de sorte que le courant réel déterminé et le courant de battement déterminé se rapportent au même pas de battement.

2. Procédé (300) selon la revendication 1, le signal de battement étant périodique avec la valeur moyenne zéro.

3. Procédé (300) selon l'une des revendications précédentes, le courant à travers le récepteur (115) étant produit par ouverture et fermeture d'un régulateur de courant (120) numérique selon un rapport temporel prédéterminé.

4. Procédé (300) selon la revendication 3, le courant qui circule à travers le récepteur (115) étant déterminé sur la base d'un rapport temporel de l'ouverture et de la fermeture du régulateur de courant (120).

5. Procédé (300) selon l'une des revendications précédentes, une demande (315) pour une modification du signal de battement étant détectée pendant le déroulement du procédé et la modification étant appliquée (330) immédiatement.

6. Procédé (300) selon l'une des revendications 1 à 4, le signal de battement étant périodique, une demande (315) pour une modification du signal de battement étant détectée et la modification étant appliquée (360) entre la fin de la période actuelle du signal de tremblement et le débit d'une période suivante du signal de tremblement.

7. Produit de programme informatique comprenant des moyens de code de programme destinés à mettre en œuvre un procédé (300) selon l'une des revendications précédentes lorsque le produit de programme informatique est exécuté sur un dispositif de traitement (105) ou mémorisé sur un support lisible par ordinateur

8. Arrangement (105) de contrôle de la plausibilité d'un courant qui circule à travers un récepteur (115), l'arrangement comprenant les éléments suivants : un dispositif de détermination (155) destiné à déterminer un courant de battement sur la base d'un signal de battement et d'un instant actuel, le signal de battement étant déterminé par une fréquence, une amplitude et une forme de signal ; le signal de battement étant subdivisé en un certain nombre de pas de battement et le courant de battement étant respectivement maintenu constant pendant un pas de battement ; un dispositif de commande (170) destiné à commander un régulateur de courant (120) afin de produire la somme d'un courant de consigne et du courant de battement déterminé à travers le récepteur (115) ; un dispositif d'échantillonnage (175) destiné à échantillonner un courant réel qui circule à travers le récepteur (115) et à fournir le courant réel réduit du courant de battement en vue d'une comparaison avec le courant de consigne, le dispositif de détermination (155) étant synchronisé avec le dispositif d'échantillonnage (175) de telle sorte que le courant réel déterminé et le courant de battement déterminé se rapportent au même pas de battement.
